# EUROPÄISCHE PATENTANMELDUNG

(11) **EP 2 998 718 A1**
(43) Veröffentlichungstag der Anmeldung: **23.03.2016**
(21) Anmeldenummer: 15185442.9
(22) Anmeldetag: 16.09.2015
(51) Int. Cl.: G01M 11/06

(54) **ANLAGE ZUR EINSTELLUNG DER SCHEINWERFER EINES KRAFTFAHRZEUGES UND VERFAHREN ZUR EINSTELLUNG DER SCHEINWERFER**

(30) Priorität: 16.09.2014 DE 102014113309
(71) Anmelder: Koch, Harro, 30974 Wenningsen (DE)
(72) Erfinder: Koch, Harro, 30974 Wenningsen (DE)
(74) Vertreter: Patentanwälte Thömen & Körner

(57) **Zusammenfassung**

Bei einer Anlage zur Einstellung der Scheinwerfer (38) eines Kraftfahrzeuges (12) mit Hilfe eines im Abstand vor dem Scheinwerfer (38) positionierten Scheinwerfereinstellgerätes ist vor den Scheinwerfern (38) quer zum Kraftfahrzeug ein verschiebbarer Messtisch angeordnet, welcher ein exakt gerades Trägerprofil umfasst, welches sich im Abstand zum Boden parallel zum Boden waagerecht erstreckt. An dem Trägerprofil ist mittels eines Adapters das Scheinwerfer-Einstellgerät (20) parallel entlang des Trägerprofils verschiebbar und vertikal bewegbar angeordnet. Der Messtisch (24) wird mit Hilfe von Referenzleserquellen (16, 18) derart ausgerichtet, dass sich das Trägerprofil (26) exakt parallel zur Hinterachse (14) des Kraftfahrzeuges (12) erstreckt. In dieser Position wird das Scheinwerfer-Einstellgerät (20) vor dem Scheinwerfer (38) positioniert, um den Scheinwerfer einzustellen.

## Beschreibung

Die Erfindung betrifft eine Anlage zur Einstellung der Scheinwerfer eines Kraftfahrzeuges gemäß dem Oberbegriff des Patentanspruchs 1 und ein Verfahren zur Einstellung der Scheinwerfer.

Damit Kraftfahrzeuge - Lastkraftwagen und/oder Personenkraftwagen oder andere Fahrzeuge - auch bei Dunkelheit fahren können, sind die Kraftfahrzeuge im allgemeinen an ihrer Vorderseite mit zwei Scheinwerfern ausgestattet, von denen einer an der linken und einer an der rechten Seite angeordnet ist, und welche den Raum vor dem Kraftfahrzeug beleuchten.

Um zu verhindern, dass die Fahrer entgegenkommender und vorausfahrender Kraftfahrzeuge durch die Scheinwerfer geblendet werden, ist es erforderlich, die Scheinwerfer nach bestimmten Kriterien optimal einzustellen bzw. auszurichten. Zwar ist es allgemein üblich, die Scheinwerfer manuell oder auch automatisch von dem sogenannten Fernlicht auf ein Abblendlicht umzuschalten, wenn ein Fahrzeug entgegenkommt, trotzdem ist bei jedem Kraftfahrzeug eine Scheinwerfereinstellung erforderlich und vorgeschrieben. Bei nicht oder falsch eingestellten Scheinwerfern kann nämlich auch das Abblendlicht die Fahrer eines entgegenkommenden oder vorausfahrenden Fahrzeuges noch erheblich blenden und zu einer erheblichen Beeinträchtigung des Gegenverkehrs führen. Im schlimmsten Fall kann dies zu gefährlichen Situationen bis hin zu einem Verkehrsunfall führen. Die Scheinwerfereinstellung ist daher von großer und wichtiger Bedeutung.

Für die Einstellung der Scheinwerfer werden in den Kraftfahrzeugwerkstätten und auch bei den Behörden, welche in vorgeschriebenen Zeitabständen die Eignung des Kraftfahrzeuges zur Teilnahme am Straßenverkehr überprüfen (z. B. der TÜV = Technischer Überwachungsverein), bekannte Scheinwerfer-Einstellgeräte verwendet. Diese sind höhenverstellbar an einer senkrechten Säule befestigt, welche an ihrem unteren Ende mit einem mittels kleiner Räder verfahrbaren Wagen verbunden ist, so dass das Scheinwerfer-Einstellgerät selbst mittels des Wagens bewegt werden kann.

In der Praxis wird das Scheinwerfer-Einstellgerät von einer Bedienungsperson im Abstand vor dem betreffenden Kraftfahrzeug aufgestellt und manuell mehr oder weniger sorgfältig auf einen der beiden Scheinwerfer ausgerichtet. Der erforderliche Abstand ist in der Regel vom Hersteller des jeweiligen Kraftfahrzeuges vorgegeben. Für die Einstellung und optimale Ausrichtung des Scheinwerfers wird in bekannter Weise der Lichtkegel des Scheinwerfers mittels einer Linse auf eine Messfläche des Scheinwerfer-Einstellgerätes projeziert.

Die Einstellung des Scheinwerfers erfolgt mechanisch durch Betätigung von Stellschrauben des Scheinwerfers. Dabei wird das Augenmerk im Wesentlichen auf die Scheinwerferhöheneinstellung gerichtet, um eine Blendung entgegenkommender Fahrzeuge zu vermeiden. Für die Erfassung von Abweichungen des Lichtkegels des Scheinwerfers nach links oder rechts werden die Scheinwerfer-Einstellgeräte über einfache Visiereinrichtungen anhand von markanten Punkten der Fahrzeugkarosserie ausgerichtet.

Nachdem in der beschriebenen Weise der eine Scheinwerfer eingestellt worden ist, wird das Scheinwerfer-Einstellgerät von Hand mittels des verfahrbaren Wagens bewegt und vor dem anderen Scheinwerfer positioniert und ausgerichtet. Danach wird der andere Scheinwerfer wie oben beschrieben eingestellt und ausgerichtet.

Die soweit beschriebene Einstellung der Scheinwerfer ist nicht frei von Nachteilen und kann zu nicht korrekt und falsch eingestellten Scheinwerfern führen. Die Scheinwerfereinstellung hängt nämlich davon ab, wie exakt das ScheinwerferEinstellgerät in Relation zum Scheinwerfer positioniert wird. Dies hängt vom Geschick und auch vom Gefühl der Bedienungsperson ab, mit der Folge, dass der Scheinwerfer von unterschiedlichen Bedienungspersonen auch unterschiedlich genau eingestellt wird. Trotzdem wird der Scheinwerfer seit Jahren in der beschriebenen Weise eingestellt, wobei gewissen Ungenauigkeiten in Kauf genommen werden.

Die in an sich bekannter Weise durchgeführte Einstellung der Scheinwerfer, nachdem das ebenfalls bekannte Scheinwerfer-Einstellgerät vor dem Scheinwerfer positioniert ist, ist nicht Gegenstand der Erfindung, so dass auf die genaue Erläuterung der Funktionsweise und Bedienung der Scheinwerfer-Einstellgeräte verzichtet wird.

Neben den bisher üblichen Scheinwerfern kommen in zunehmendem Maße neue Lichtsysteme in Form von Matrix-LED-Scheinwerfern zur Anwendung. Diese Matrix-LED-Scheinwerfer umfassen eine Vielzahl von einzelnen Leuchtdioden, die mit vorgeschalteten Linsen oder Reflektoren zusammenarbeiten. Dabei bildet eine Gruppe von mehreren Leuchtdioden ein Segment, wobei die Gruppe von Leuchtdioden durch einen gemeinsamen Reflektor leuchtet.

Die Matrix-LED-Scheinwerfer erzeugen ein blendfreies LED-Fernlicht, welches für eine optimale Ausleuchtung der Fahrbahn sorgt. Bei Gegenverkehr oder vorausfahrenden Fahrzeugen schaltet der Matrix-LED-Scheinwerfer partiell Dioden aus, oder die Dioden werden gedimmt, um andere Verkehrsteilnehmer nicht zu blenden.

Zu dem Zweck ist bei dem betreffenden Fahrzeug im Inneren eine Kamera an der Windschutzscheibe installiert, die mit den Matrix-LED-Scheinwerfern in Verbindung steht. Sobald die Kamera vorausfahrende oder entgegenkommende Fahrzeuge verfasst, blenden die Matrix-LED-Scheinwerfer das Fernlicht in den notwendigen Teilbereichen aus. Diejenigen Leuchtdioden, die den Gegenverkehr oder vorausfahrende Fahrzeuge blenden, werden ausgeschaltet, während die übrigen Leuchtdioden eingeschaltet bleiben und die anderen Bereiche weiterhin voll vom Fernlicht erhellt werden.

Da das Erkennen und Abblenden eines Teilbereiches in der Regel in bis zu einigen hundert Metern Entfernung stattfindet, ist für die Einstellung solcher Matrix-LED-Scheinwerfer eine wesentlich höhere Genauigkeit notwendig, als bei den herkömmlichen Scheinwerfern.

Der Erfindung liegt die Aufgabe zugrunde, eine Anlage zu schaffen, welche es ermöglicht, mit Hilfe eines üblichen Scheinwerfer-Einstellgerätes Scheinwerfer aller Art erheblich genauer einzustellen. Insbesondere soll eine exakte Einstellung von Matrix-LED-Scheinwerfern ermöglicht werden.

Der Erfindung liegt ferner die Aufgabe zugrunde, ein Verfahren zur genauen Einstellung von Scheinwerfern zu schaffen.

Hinsichtlich der Anlage nach dem Oberbegriff des Patentanspruchs 1 wird die Aufgabe durch die Merkmale des Patentanspruchs 1 gelöst, und hinsichtlich des Verfahrens erfolgt die Lösung der Aufgabe durch die Merkmale des Patentanspruchs 6.

Der Kern der Erfindung liegt darin, in neuartiger Weise bei der Einstellung der Scheinwerfer erstmals die Geometrie des Kraftfahrzeuges bzw. die tatsächliche Fahrtrichtung des Kraftfahrzeuges in Bezug auf das Scheinwerfer-Einstellgerät zu berücksichtigen und einzubeziehen. Bisher hat man bei der Positionierung des Scheinwerfer-Einstellgerätes die Stellung des Kraftfahrzeuges mehr oder weniger außer Acht gelassen und nicht darauf geachtet, ob das Fahrzeug tatsächlich gerade ausgerichtet ist.

Bei der Erfindung wird quer vor dem Kraftfahrzeug ein bewegbarer Messtisch angeordnet. Der Messtisch umfasst ein exakt gerades Trägerprofil, welches sich im Abstand vom Boden erstreckt. Der Messtisch wird so verstellt, dass das Trägerprofil parallel zum Boden und parallel zur Hinterachse, also parallel zur ungelenkten Achse des Kraftfahrzeuges, verläuft. In dieser Lage wird die Hinterachse sozusagen durch das Trägerprofil abgebildet. Das Trägerprofil steht damit senkrecht zur geometrischen Fahrachse des Kraftfahrzeuges, die sich senkrecht zur Hinterachse erstreckt. Auf diese Weise hat man praktisch die geometrische Fahrachse durch die Stellung des Trägerprofils ermittelt.

An dem Trägerprofil ist mittels eines Adapters das an sich bekannte Scheinwerfer-Einstellgerät derart angeordnet, dass es sowohl waagerecht entlang des Trägerprofils verschiebbar als auch in der Höhe verstellbar ist. Das nach vorn auf den Scheinwerfer gerichtete Scheinwerfer-Einstellgerät ist nunmehr exakt in Richtung der geometrischen Fahrachse eingestellt. Die geometrische Fahrachse ist deshalb von Bedeutung, weil sie die Richtung vorgibt, in welcher sich das Kraftfahrzeug bei Geradeausfahrt bewegt. Im Idealfall stimmt die geometrische Fahrachse mit der Fahrzeuglängsachse überein. Aufgrund von Toleranzen der Hinterachse können die Fahrzeuglängsachse und die geometrische Fahrachse aber auch voneinander abweichen. Das Fahrzeug fährt dann im sogenannten "Dackellauf" in geringer Schrägstellung geradeaus, und zwar wiederum in Richtung der geometrischen Fahrachse.

Ersichtlich ist die geometrische Fahrachse von entscheidender Bedeutung, und wenn die Scheinwerfer in Richtung der geometrischen Achse strahlen und das Scheinwerfer-Einstellgerät ebenfalls in Richtung der geometrischen Fahrachse ausgerichtet ist, ist eine sehr genaue Scheinwerfereinstellung möglich.

Nachdem der eine Scheinwerfer in der beschriebenen Weise eingestellt worden ist, wird das Scheinwerfer-Einstellgerät entlang des Trägerprofils waagerecht bis vor den anderen Scheinwerfer verschoben. Da das Trägerprofil zum einen senkrecht zur geometrischen Fahrachse und zum anderen parallel zum Boden verläuft, behält das Scheinwerfer-Einstellgerät dabei seine parallele Ausrichtung zur geometrischen Fahrachse bei, und der andere Scheinwerfer kann nunmehr in gleicher Weise exakt wie der vorherige Scheinwerfer eingestellt werden.

Die Erfindung schafft in vorteilhafter Weise für den Benutzer und Bediener eines Scheinwerfer-Einstellgerätes erstmals die Möglichkeit, das Scheinwerfer-Einstellgerät für die Einstellung der Scheinwerfer so zu positionieren, dass die Stellung des Kraftfahrzeugs durch Ermittlung der geometrischen Fahrachse mit einbezogen wird und die Einstellung des Scheinwerfers daher mit extrem großer Genauigkeit erfolgt. Somit wird der Gegenverkehr weniger geblendet, was zu einer Erhöhung der Verkehrssicherheit führt.

Weiterbildungen und vorteilhafte Ausgestaltungen der erfindungsgemäßen Anlage ergeben sich aus den Unteransprüchen.

Hinsichtlich des Verfahrens zur Einstellung des Scheinwerfers eines Kraftfahrzeuges und der Verwendung eines Scheinwerfer-Einstellgerätes sieht die Erfindung vor, in einem ersten Verfahrensschritt die geometrische Fahrachse des Kraftfahrzeuges zu bestimmen und in einem zweiten Schritt das Scheinwerfer-Einstellgerät derart vor dem Scheinwerfer zu positionieren und auszurichten, dass die Messrichtung des Scheinwerfer-Einstellgerätes parallel zur geometrischen Fahrachse verläuft. Danach erfolgt in an sich bekannter Weise die Bedienung des Scheinwerfer-Einstellgerätes und die Einstellung der Scheinwerfer.

Nachfolgend wird die Erfindung anhand eines Ausführungsbeispiels näher erläutert, welches in der Zeichnung dargestellt ist. Es zeigen:
- Fig. 1: eine Draufsicht auf ein Kraftfahrzeug mit einer schematisch dargestellten erfindungsgemäßen Anlage,
- Fig. 2: eine perspektivische Darstellung eines Messtisches mit einem Scheinwerfer-Einstellgerät, und
- Fig. 3: eine Halterung für eine Messskala und für eine Referenzlaserquelle.

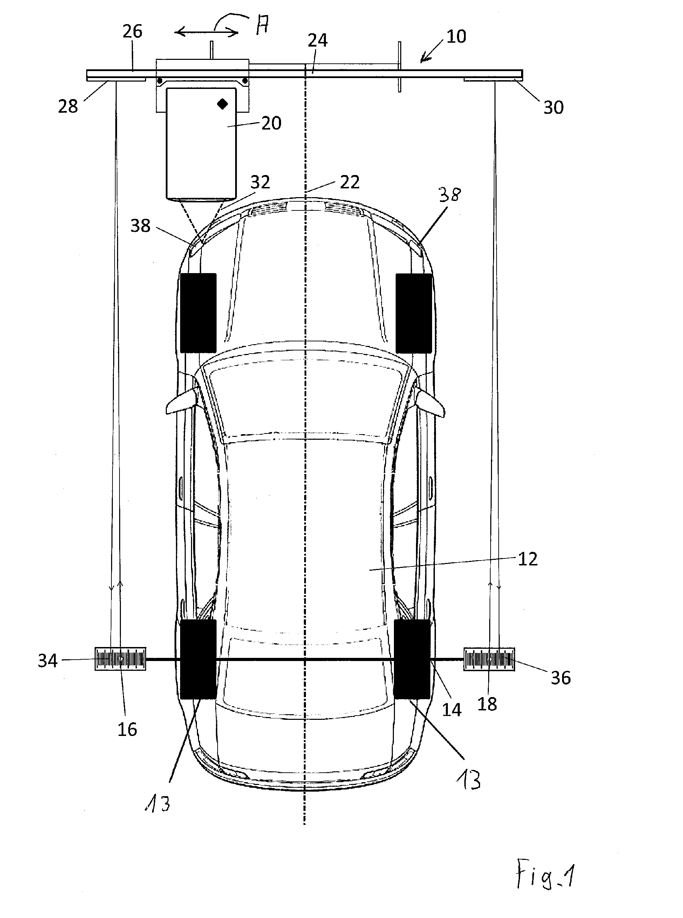

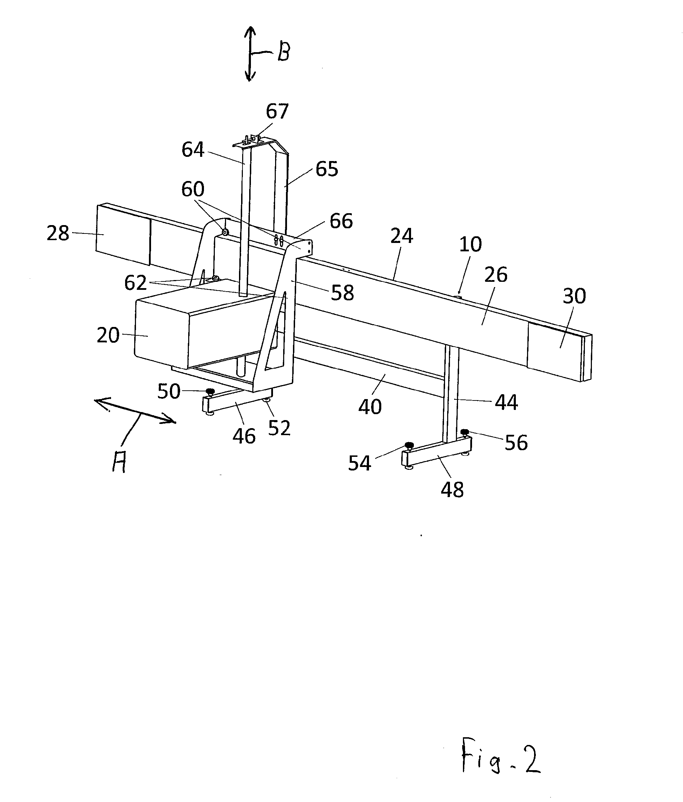

In Fig. 1 sind in schematischer Darstellung ein Ausführungsbeispiel einer erfindungsgemäßen Anlage 10 und ein Kraftfahrzeug 12 in Form eines Personenkraftwagens dargestellt, welcher eine durch eine horizontale Linie angedeutete Hinterachse 14 besitzt, auf der die Hinterräder 13 des Kraftfahrzeugs 12 angeordnet sind. Das Fahrzeug 12 besitzt zwei Scheinwerfer 38, wobei vom linken Scheinwerfer 38 noch der Lichtkegel 32 dargestellt ist. Mittels eines in Fig. 2 näher dargestellten Adapters 58 ist an dem Trägerprofil 26 ein Scheinwerfer-Einstellgerät 20 verfahrbar angeordnet, auf welchen der Lichtkegel 32 des linken Scheinwerfers 38 gerichtet ist.

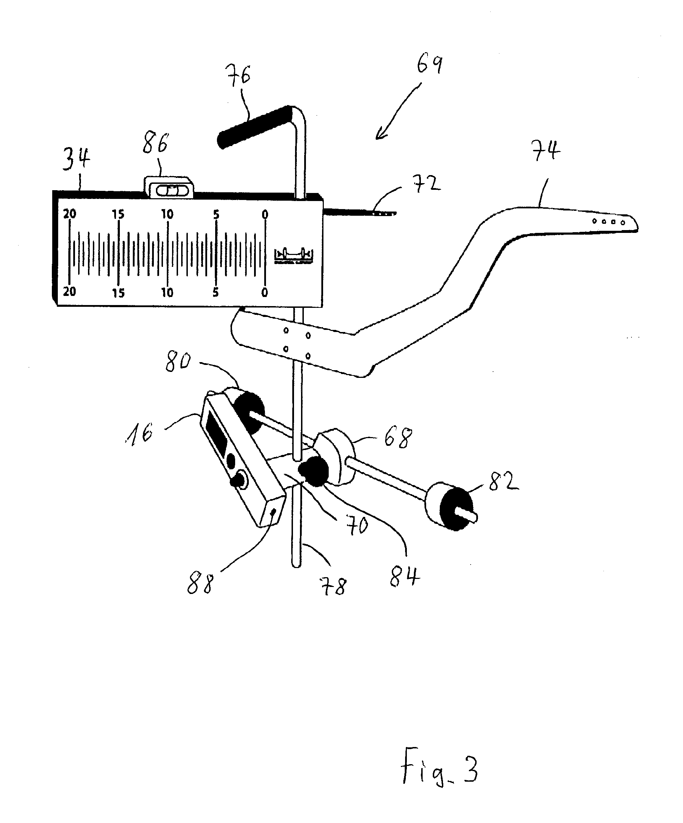

An jeder äußeren Felge der Hinterräder 13 der Hinterachse 14 ist rechtwinklig zur Rotationsebene der Hinterräder 13 jeweils eine verschwenkbare Referenzlaserquelle 16, 18 angeordnet. Die Referenzlaserquellen 16, 18 sind in der Arbeitsposition derart verschwenkt, dass ihre Laserstrahlrichtung im rechten Winkel zur Hinterachse 14 nach vorn weist. Die Referenzlaserquellen 16, 18 stehen jeweils mit einer Messskala 34, 36 in Verbindung, wobei die zugeordneten Referenzlaserquellen 16, 18 unterhalb der Messskalen 34, 36 angeordnet sind, wie in Fig. 3 zu erkennen ist.

Quer zur Fahrzeuglängsachse 22 ist in einem definierten Abstand als Kernstück der Anlage 10 ein bewegbarer Messtisch 24 angeordnet. Der Abstand hängt vom betreffenden Kraftfahrzeug 12 ab und ist vom Hersteller des Kraftfahrzeuges 12 vorgegeben. Ein wesentlicher Bestandteil des Messtisches 24 ist ein verwindungssteifes, exakt lineares Trägerprofil 26, welches sich im Abstand vom Boden parallel zum Boden erstreckt, und welches mit seinen äußeren Enden die Breite des Kraftfahrzeuges 12 überragt. Auf der dem Kraftfahrzeug 12 zugewandten Vorderseite des Trägerprofils 26 befindet sich an den äußeren Enden zwei Spiegelflächen 28, 30, die parallel zueinander verlaufen und sich senkrecht erstrecken.

Die Laserstrahlen der Referenzlaserquellen 16 und 18 werden auf die am Trägerprofil 26 befestigten Spiegelflächen 28, 30 gerichtet. Die reflektierten Laserstrahlen treffen daraufhin auf die Messskalen 34, 36. Durch Verschieben des Messtisches 24 wird das Trägerprofil 26 dann in der Weise ausgerichtet, dass die reflektierten Lichtstrahlen auf beiden Seiten des Kraftfahrzeuges 12 um das gleiche Abstandsmaß zur Ursprungs-Referenzlaserquelle 16, 18 auf die jeweilige Messskala 34, 36 treffen. Damit ist das Trägerprofil 26 exakt parallel zur Hinterachse 14 ausgerichtet, wobei sich die geometrische Fahrachse des Kraftfahrzeuges 12 senkrecht zum Trägerprofil 26 erstreckt.

Nunmehr wird das am Trägerprofil 26 gehaltene und in Richtung des Doppelpfeiles A bewegliche Scheinwerfer-Einstellgerät 20 vor den linken Scheinwerfer 38 geschoben, wobei das Scheinwerfer-Einstellgerät 20 wegen des parallel zur Hinterachse 14 verlaufenden Trägerprofils 26 in Richtung der geometrischen Fahrachse ausgerichtet ist, die im Idealfall mit der Fahrzeuglängsachse 22 übereinstimmt. Damit ist das Scheinwerfer-Einstellgerät 20 optimal positioniert, und der Scheinwerfer 38 kann nunmehr äußerst genau eingestellt werden.

Gemäß Fig. 2 umfasst die Anlage 10 einen Messtisch 24, dessen Hauptbestandteil das horizontal verlaufende Trägerprofil 26 ist, welches an einem Haltegestell 40 mit vertikalen Pfosten 44 befestigt ist, wobei in Fig. 2 nur der eine rechte vertikale Pfosten 44 erkennbar ist; der linke vertikale Pfosten ist in der Zeichnung durch das Scheinwerfereinstellgerät 20 und durch den Adapter 58 abgedeckt. An den unteren Enden der vertikalen Pfosten 44 sind quer zum Trägerprofil 26 horizontal verlaufende Füße 46, 48 angeordnet, die an ihren Enden jeweils mit Stellfüßen 50 - 56 versehen sind, um das Trägerprofil 26 in seiner Höhe verstellen zu können.

Mit Hilfe des Adapters 58 ist das Scheinwerfereinstellgerät 20 mit dem Trägerprofil 26 verbunden und waagerecht exakt parallel zum Trägerprofil 26 verschiebbar. Dadurch ist ein schneller Wechsel zwischen den verschiedenen Scheinwerfern auf beiden Seiten des Kraftfahrzeuges 12 sichergestellt. Die waagerechte Verschiebbarkeit des Scheinwerfereinstellgerätes 20 beziehungsweise des Adapters 58 wird über kugelgelagerte Rollen 60 und 62 erreicht, die am Trägerprofil 26 anliegen, und von denen in Fig. 2 nur jeweils die linken Rollen 60, 62 sichtbar sind. Zur Anpassung des Scheinwerfereinstellgerätes 20 an unterschiedliche Einbauhöhen der Scheinwerfer 38 dient eine senkrechte Führungsstange 64, die oben über eine Justageschraube 67 an einer Stütze 65 des Adapters positioniert ist. Die Stütze 65 ist an einer Querstrebe 66 des Adapters 58 befestigt. Die waagerechte Verschiebbarkeit des Scheinwerfer-Einstellgerätes 20 ist durch den Doppelpfeil A angedeutet, und der Doppelpfeil B verdeutlicht die Verstellung des Scheinwerfer-Einstellgerätes 20 in der Höhe.

Fig. 3 zeigt in einer perspektivischen Darstellung eine Halterung 69, an welcher die Messskala 34 und die Referenzleserquelle 16 angebracht sind. Die Referenzleserquelle 16 mit der Messskala 34 ist in ihrem konstruktiven Aufbau mit der Referenzleserquelle 18 aus Fig. 1 identisch, und entsprechend ist die Referenzleserquelle 18 mit einer Halterung nebst Anbauteilen verbunden, welche der Halterung 69 entspricht.

Die Halterung 69 umfasst eine senkrechte Stange 78 mit einem oberen Bedienungsgriff 76. An der Stange sind die Messskala 34, zwei versetzt zueinander verlaufende Haltebügel 72, 74 sowie eine Achse 70 befestigt, welche vertikal entlang der Stange 78 bewegbar und mittels eines Schraubbolzens 84 arretierbar ist. Auf der dem Kraftfahrzeug 12 abgewandten Ende der Achse ist die Referenzleserquelle 16 mit einer Lichtaustrittsöffnung 88 verschwenkbar angeordnet, und auf der dem Kraftfahrzeug zugewandten Seite der Achse befindet sich eine Zentralplatte 68. Die Achse 70 erstreckt sich in Verlängerung der Hinterachse 14. Die Haltebügel 72, 74 legen sich am Laufstreifen des betreffenden Hinterrades 13 an. Zu beiden Seiten der Zentralplatte 68 erstrecken sich runde Stangen, an deren Enden sich diametral zueinander Anlagekörper 80 und 82 befinden. Während die Haltebügel 72, 74 sich am Laufstreifen des Hinterrades anlegen, werden die Anlagekörper 80, 82 an der Felge des Hinterrades 13 oder an der seitlichen Fläche des Hinterrades angelegt.

Mit der Halterung 69 lassen sich die Messskala 34 und die Referenzleserquelle 16 mit wenigen Handgriffen einfach am Hinterrad anbringen. Zur genauen Ausrichtung der Messskala 34 ist diese nach Art einer Wasserwaage mit einer Libelle 86 versehen.

### Bezugszeichenliste

### (ist Teil der Beschreibung)

- 10: Anlage
- 12: Kraftfahrzeug
- 13: Hinterräder
- 14: Hinterachse
- 16: Referenzlaserquelle
- 18: Referenzlaserquelle
- 20: Scheinwerfer-Einstellgerät
- 22: Fahrzeuglängsachse
- 24: Messtisch
- 26: Trägerprofil
- 28: Spiegelfläche
- 30: Spiegelfläche
- 32: Lichtkegel
- 34: Messskala
- 36: Messskala
- 38: Scheinwerfer
- 40: Haltegestell
- 42: Pfosten
- 44: Pfosten
- 46: Fuß
- 48: Fuß
- 50: Stellfuß
- 52: Stellfuß
- 54: Steilfuß
- 56: Stellfuß
- 58: Adapter
- 60: Rollen
- 62: Rollen
- 64: Führungsstange
- 65: Stütze
- 66: Querstrebe
- 67: Justageschraube
- 68: Zentralplatte
- 69: Halterung
- 70: Achse
- 72: Haltebügel
- 74: Haltebügel
- 76: Bedienungsgriff
- 78: Stange
- 80: Anlagekörper
- 82: Anlagekörper
- 84: Schraubbolzen
- 86: Libelle
- 88: Lichtaustrittsöffnung
- A: Doppelpfeil
- B: Doppelpfeil

## Patentansprüche

1. Anlage zur Einstellung der Scheinwerfer (38) eines Kraftfahrzeuges (12) mit Hilfe eines im Abstand vor dem Scheinwerfer (38) positionierten Scheinwerfer-Einstellgerätes (20), **dadurch gekennzeichnet, dass** in einem definierten, vom jeweiligen Kraftfahrzeug (12) abhängigen Abstand vor dem Kraftfahrzeug (12) ein bewegbarer Messtisch (24) mit einem exakt geraden Trägerprofil (26) angeordnet ist, welches sich im Abstand parallel zum Boden waagerecht erstreckt, dass der Messtisch (24) derart bewegt und einstellt wird, dass das Trägerprofil (26) parallel zur Hinterachse (14) des Kraftfahrzeuges (12) verläuft, und dass das Scheinwerfer-Einstellgerät (20) mittels eines Adapters (58) waagerecht verschiebbar und vertikal bewegbar an dem Trägerprofil (26) des Messtisches (24) angeordnet ist.

2. Anlage nach Anspruch 1, **dadurch gekennzeichnet, dass** die äußeren Enden des Trägerprofil (26) über die Breite des Kraftfahrzeuges (12) hinausragen, dass auf der dem Kraftfahrzeug (12) zugewandten Seite des Trägerprofils (26) an dessen äußeren Enden je eine Spiegelfläche (28, 30) parallel zueinander angeordnet ist, die sich jeweils senkrecht erstrecken, dass an jedem der beiden äußeren Felgen der Hinterräder (13) der Hinterachse (14) jeweils eine Referenzlaserlichtquelle (16, 18) mittels einer Halterung (69) angeordnet ist, wobei die Laserstrahlrichtung im rechten Winkel zur Hinterachse (14) nach vorn auf die Spiegelflächen (28, 30) weist und dass jede Referenzlaserquelle (16, 18) mit jeweils einer zugeordneten Messskala (34, 36) in Verbindung steht, die jeweils parallel zu den Spiegelflächen (28, 30) angeordnet sind, und auf welche die von den Spiegelflächen (28, 30) reflektierten Laserstrahlen auftreffen.

3. Anlage nach Anspruch 2, **dadurch gekennzeichnet, dass** das waagerecht angeordnete Trägerprofil (26) an einem Haltegestell (40) mit senkrechten Pfosten (42, 44) befestigt ist, dass an den unteren Enden der Pfosten (42, 44) waagerechte Füße (46, 48) quer zum Trägerprofil (26) angeordnet sind, und dass die Füße (46, 48) an ihren Enden jeweils mit Stellfüßen (50 - 56) versehen sind.

4. Anlage nach Anspruch 2, **dadurch gekennzeichnet, dass** die Halterung (69) eine senkrecht verlaufende Stange (78) enthält, die am oberen Ende einen Griff (76) besitzt, dass an der Stange (78) die Messskala (34), zwei versetzt zueinander verlaufende Haltebügel (72, 74) und eine senkrecht zur Stange (78) verlaufende Achse (70) befestigt sind, und dass am äußeren dem Kraftfahrzeug (12) abgewandten Ende der Achse (70) die Referenzlaserquelle (16, 18) verschwenkbar angeordnet ist.

5. Anlage nach Anspruch 4, **dadurch gekennzeichnet, dass** die Achse (70) an ihrem dem Kraftfahrzeug (12) zugewandtem Ende eine Zentralplatte (68) aufweist, an welcher zwei Anlagekörper (80, 82) diametral zueinander angeordnet sind, die an den Hinterrädern (13) anliegen.

6. Verfahren zur Einstellung der Scheinwerfer eines Kraftfahrzeuges unter Verwendung eines Scheinwerfer-Einstellgerätes, **gekennzeichnet durch** folgende Schritte:
a) Bestimmung der geometrischen Fahrachse des Kraftfahrzeuges,
b) Positionierung und Ausrichtung des Scheinwerfer-Einstellgerätes vor dem Scheinwerfer in der Art, dass die Messrichtung des Scheinwerfer-Einstellgerätes parallel zur geometrischen Fahrachse verläuft.
